# EUROPEAN PATENT SPECIFICATION

(11) **EP 3 755 040 B1**
(45) Date of publication and mention of the grant of the patent: **15.04.2026**
(21) Application number: 18906632.7
(22) Date of filing: 15.02.2018
(51) Int. Cl.: H04L 5/00, H04W 72/23, H04W 24/10

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 23.12.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/005340
(87) International publication number: WO 2019/159295

(56) References cited:
- HUAWEI ET AL: "Need for new MAC CEs for UL and DL beam management", vol. RAN WG2, no. Reno, Nevada, USA; 20171127 - 20171201, 17 November 2017 (2017-11-17), XP051371523, Retrieved from the Internet <URL:http://www.3gpp.org/ftp/tsg%5Fran/WG2%5FRL2/TSGR2%5F100/Docs/> [retrieved on 20171117]
- ZTE ET AL: "Summary of remaining issues on CSI measurement", vol. RAN WG1, no. Vancouver, Canada; 20180122 - 20180126, 24 January 2018 (2018-01-24), XP051385285, Retrieved from the Internet <URL:http://www.3gpp.org/ftp/tsg%5Fran/WG1%5FRL1/TSGR1%5FAH/NR%5FAH%5F1801/Docs/> [retrieved on 20180124]
- ERICSSON: "On activation and deactivation of semi-persistent CSI reporting on PUSCH", vol. RAN WG1, no. Vancouver, Canada; 20180122 - 20180126, 13 January 2018 (2018-01-13), pages 1 - 4, XP051385014, Retrieved from the Internet <URL:http://www.3gpp.org/ftp/tsg%5Fran/WG1%5FRL1/TSGR1%5FAH/NR%5FAH%5F1801/Docs/> [retrieved on 20180113]
- "3rd Generation Partnership Project; Technical Specification Group Radio Access Network; NR; Physical layer procedures for data (Release 15)", 3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.0.0, 3 January 2018 (2018-01-03), pages 1 - 71, XP051392264
- NTT DOCOMO: "Remaining issues on CSI reporting", vol. RAN WG1, no. Sanya, China; 20180416 - 20180420, 15 April 2018 (2018-04-15), XP051427301, Retrieved from the Internet <URL:http://www.3gpp.org/ftp/Meetings%5F3GPP%5FSYNC/RAN1/Docs/> [retrieved on 20180415]
- ERICSSON: "Summary of CSI reporting v3", 3GPP TSG RAN WG1 MEETING AH 1801, R1-1801069, 22 January 2018 (2018-01-22), XP051385300
- CATT: "Remaining issues on CSI reporting", 3GPP TSG RAN WG1 MEETING AH 1801, R1-1800240, 22 January 2018 (2018-01-22), XP051384719

## Description

### Technical Field

The present disclosure relates to a terminal, a radio communication method and a base station in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In an existing LTE system (for example, LTE Rel. 8 to Rel. 13), a user terminal (UE: User Equipment) periodically and/or aperiodically transmits channel state information (CSI) to a base station. A UE transmits CSI by means of an uplink control channel (PUCCH: Physical Uplink Control Channel) and/or an uplink shared channel (PUSCH: Physical Uplink Shared Channel).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
ZTE ET AL: "Summary of remaining issues on CSI measurement" a summary on CRI is part of CSI reporting, the latter including semi-persistent reporting on PUSCH.
HUAWEI ET AL: "Need for new MAC CEs for UL and DL beam management" discloses that different DCI settings point to different SP-CSI configurations.

### Summary of Invention

### Technical Problem

For a future radio communication system (for example, NR), study has been conducted on a CSI report using a structure different from that of the existing LTE system (for example, before LTE Rel. 13).

For example, study has been conducted on a SP-CSI (Semi-Persistent CSI) report that a UE reports CSI by means of a resource specified semi-permanently (semi- persistently, semi-persistent).

Control of activation and deactivation of the SP-CSI report according to an indication from the base station is conceivable. It is also conceivable to configure a plurality of CSI reports and control the SP-CSI report.

However, in a case of performing a plurality of SP-CSI reports different from each other in conditions, study has not been conducted on the way to control, for example, activation and/or deactivation of the plurality of SP-CSI reports. Without use of a proper control method in a case of allowing activation of the plurality of SP-CSI reports, there is a probability that deterioration of communication throughput, a communication quality, and the like is caused.

For this reason, one object of the present disclosure is to provide a user terminal and a radio communication method configured so that a plurality of SP-CSI reports can be properly controlled even in a case where activation of the plurality of SP-CSI reports is supported.

### Solution to Problem

The object of the invention is achieved by the subjectmatter of the independent claims. Advantageous embodiments are defined in the dependent claims. Further examples are provided for facilitating the understanding of the invention.

### Advantageous Effects of Invention

According to one aspect of the present disclosure, the plurality of SP-CSI reports can be properly controlled even in a case where activation of the plurality of SP-CSI reports is supported.

### Brief Description of Drawings

FIG. 1 is a diagram to show an example in a case of indicating activation/deactivation of a plurality of SP-CSI configurations;
FIGS. 2A and 2B are diagrams to show an example of activation/deactivation of the plurality of SP-CSI configurations;
FIG. 3 is a diagram to show an example of the timing of transmitting DCI indicating activation/deactivation of the SP-CSI configuration;
FIG. 4 is a diagram to show an example of the timing of reporting the SP-CSI configuration transmitted based on DCI;
FIG. 5 is a diagram to show an example of a schematic structure of a radio communication system according to one embodiment;
FIG. 6 is a diagram to show an example of an overall structure of a radio base station according to one embodiment;
FIG. 7 is a diagram to show an example of a functional structure of the radio base station according to one embodiment;
FIG. 8 is a diagram to show an example of an overall structure of a user terminal according to one embodiment;
FIG. 9 is a diagram to show an example of a functional structure of the user terminal according to one embodiment; and
FIG. 10 is a diagram to show an example of a hardware structure of the radio base station and the user terminal according to one embodiment.

### Description of Embodiments

For NR, a reference signal for measuring a channel state in a downlink is under study. The reference signal for channel state measurement may be a signal called as a CRS (Cell-specific Reference Signal), a CSI-RS (Channel State Information-Reference Signal), or the like.

A UE feeds back (reports), as the channel state information (CSI), a measurement result based on the reference signal for channel state measurement to a radio base station (for example, may be also referred to as a BS (Base Station), a transmission/reception point (TRP), an eNB (eNodeB), a gNB (NR NodeB), or the like) at certain timing. The CSI may include a CQI (Channel Quality Indicator), a PMI (Precoding Matrix Indicator), an RI (Rank Indicator), and the like.

As a CSI feedback method, followings are under study: (1) a periodic CSI (P-CSI) report, (2) an aperiodic CSI (A-CSI) report, (3) a semi-permanent (semi-persistent) CSI report (SP-CSI: Semi-Persistent CSI), and the like.

In a case of temporarily specifying an SP-CSI report resource (may be also referred to as a "SP-CSI resource"), the UE can periodically utilize resources based on such specification, unless otherwise specifying cancellation (release or deactivation) of the SP-CSI resource.

The SP-CSI resource may be a resource configured by higher layer signaling, or may be a resource specified by an SP-CSI report activation signal (may be also referred to as a "trigger signal").

Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), and the like.

SP-CSI resource information may include, for example, information regarding a report periodicity (ReportPeriodicity) and an offset (ReportSlotOffset), and these types of information may be expressed in a slot unit, a subframe unit, or the like. The SP-CSI resource information may include a configuration ID (CSI-ReportConfigId), and the configuration ID may identify the type of CSI report method (for example, SP-CSI or not) and a parameter such as the report periodicity. The SP-CSI resource information may be also referred to as an "SP-CSI resource configuration," an "SP-CSI report configuration," or the like.

In a case where the UE has received a certain activation signal, the UE can periodically perform CSI measurement using a certain reference signal (for example, may be also referred to as "SP-CSI-RS") and/or SP-CSI report using the SP-CSI resource, for example. In a case where the UE has received a certain deactivation signal or a case where a certain timer expires, the UE stops SP-CSI measurement and/or report.

The SP-CSI report may be transmitted using a primary cell (PCell), a primary secondary cell (PSCell), a PUCCH secondary cell (PUCCH SCell), another cell (for example, a secondary cell), or the like.

The SP-CSI report activation/deactivation signal may be, for example, reported using MAC signaling (for example, MAC CE), or may be reported using physical layer signaling (for example, downlink control information (DCI)).

Note that the SP-CSI report may be transmitted using one or both of a PUCCH and a PUSCH. One to be used for transmission may be configured to the UE from a gNB by RRC signaling, may be specified by MAC CE or the like, or may be reported by DCI.

The channel performing the SP-CSI report may be judged based on the SP-CSI report activation signal. For example, the SP-CSI report using a PUCCH may be activated by a MAC CE, and the SP-CSI report using a PUCSH may be triggered by DCI.

Such DCI may be DCI with cyclic redundancy check (CRC) bits masked (scrambled) with a radio network temporary identifier (RNTI) for SP-CSI report.

As described above, for NR, it is studied to control SP-CSI report activation by DCI. In terms of grasping details of the channel state, configuration of a plurality of different conditions (also referred to as "SP-CSI configurations") as the SP-CSI reports and simultaneous activation of a plurality of reports of the SP-CSI configurations are conceivable.

However, in a case of controlling the plurality of reports of the SP-CSI configurations different from each other in conditions, there is a problem in the way to control activation and/or deactivation of the plurality of SP-CSI reports, for example.

In view of this, the inventors of the present invention came up with the idea of utilizing the downlink control information to properly perform activation and/or deactivation of the plurality of SP-CSI configurations different from each other in conditions.

Embodiments according to the present disclosure will be described in detail with reference to the drawings as follows. Aspects described below may be employed independently or may be employed in combination.

Note that in description below, an SP-CSI report utilizing PUSCH will be described, but the present disclosure is not limited to this. SP-CSI reports transmitted utilizing other channels may be similarly employed.

### (First Aspect)

In a first aspect, activation and/or deactivation (activation/deactivation) of reports of one or more SP-CSI configurations utilizing a PUSCH are controlled based on downlink control information.

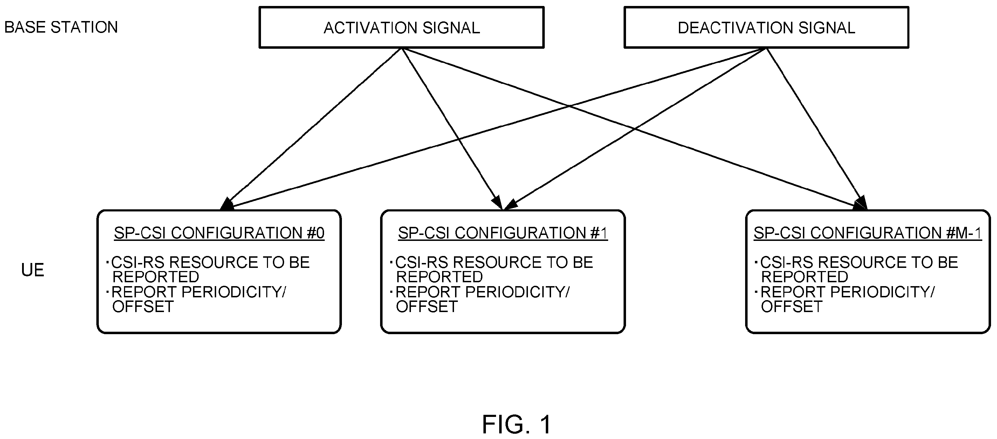

FIG. 1 is a diagram to show an example of activation/deactivation of a plurality of SP-CSI configurations utilizing a PUSCH according to the first aspect. The SP-CSI configuration (SP-CSI on PUSCH config) utilizing a PUSCH includes at least one of information regarding CSI to be reported and information regarding an SP-CSI report resource.

The information regarding CSI to be reported corresponds to, for example, information indicating a CSI-RS resource to be reported (or measured). The information regarding the SP-CSI report resource corresponds to information indicating the periodicity and/or offset of a SP-CSI report.

In FIG. 1, the plurality of SP-CSI configurations (here, SP-CSI on PUSCH config #0, #1, #M-1) is configured to the UE, and activation/deactivation of the plurality of SP-CSI configurations is controlled based on the downlink control information. The plurality of SP-CSI configurations is configured to the UE from a base station by means of higher layer signaling or the like.

The base station utilizes the downlink control information (an activation signal) to indicate activation of the reports of one or more SP-CSI configurations to the UE. The base station utilizes the downlink control information (a deactivation signal) to indicate deactivation of the reports of one or more SP-CSI configurations to the UE.

The UE activates and/or deactivates reports of one or more certain SP-CSI configurations specified by the downlink control information among candidates of the plurality of SP-CSI configurations configured by the higher layer signaling.

It may be configured such that the downlink control information includes at least one of information indicating the SP-CSI configuration to be activated and information indicating the SP-CSI configuration to be deactivated. For example, utilizing a single piece of downlink control information, the plurality of SP-CSI configurations may be simultaneously activated or the plurality of SP-CSI configurations may be simultaneously deactivated. Alternatively, utilizing a single piece of downlink control information, some of the SP-CSI configurations may be activated, and the other SP-CSI configurations may be deactivated.

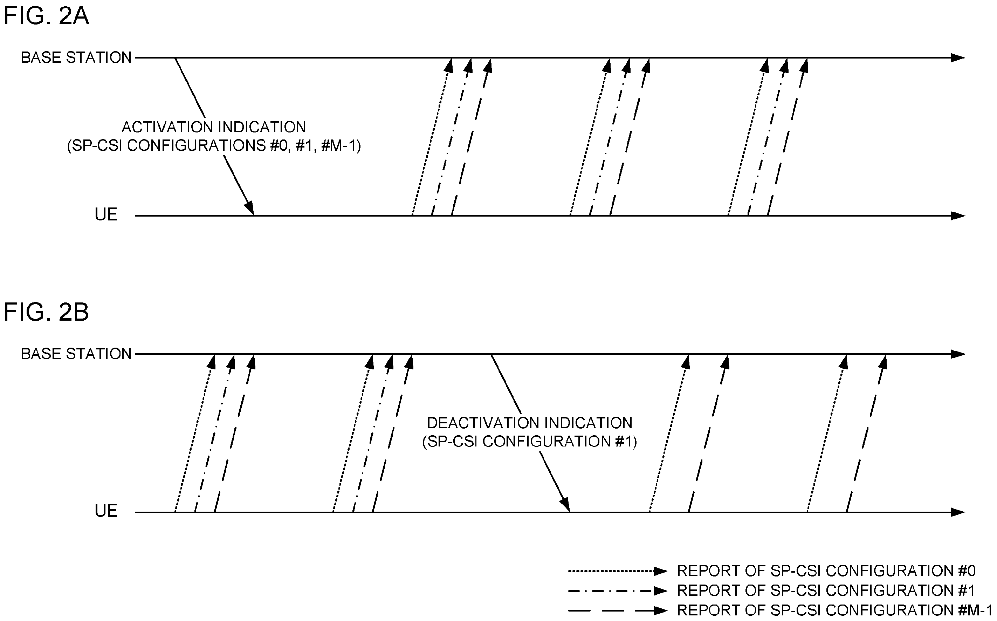

FIG. 2A shows a case where the base station utilizes a single piece of downlink control information to indicate activation of the reports of the plurality of SP-CSI configurations (here, SP-CSI on PUSCH config #0, #1, #M-1) to the UE. The UE activates a report of a certain SP-CSI configuration, based on the downlink control information transmitted from the base station to start the report of the SP-CSI configuration.

FIG. 2B shows a case where the base station utilizes a single piece of downlink control information to indicate deactivation of a report of a certain SP-CSI configuration (here, SP-CSI on PUSCH config #1) among the plurality of activated SP-CSI configurations (here, SP-CSI on PUSCH config #0, #1, #M-1) to the UE. The UE deactivates the report of the certain SP-CSI configuration based on the downlink control information transmitted from the base station to stop the report of the certain SP-CSI configuration.

As described above, activation and/or deactivation of the plurality of SP-CSI configurations is controlled based on the downlink control information, and therefore, the report of the SP-CSI configuration can be flexibly configured. As a result, channel state information can be flexibly acquired on a base station side from the UE based on a communication status, and therefore, a communication quality can be improved.

Each bit value (also referred to as "code-point") in a certain bit field included in the downlink control information and an index of the SP-CSI configuration to be activated or deactivated may be defined in association with each other. Note that information (or table contents) on association between each bit value and the index of the SP-CSI configuration may be configured in advance to the UE by means of the higher layer signaling or the like.

Alternatively, a certain bit field included in the downlink control information may be utilized as a bitmap format to report activation and/or deactivation of the plurality of pre-configured SP-CSI configurations. Note that a certain field included in the downlink control information may be a CSI request field or other fields.

### (Second Aspect)

In a second aspect, the timing of transmitting and/or receiving downlink control information (DCI) indicating activation/deactivation of a report of an SP-CSI configuration is controlled.

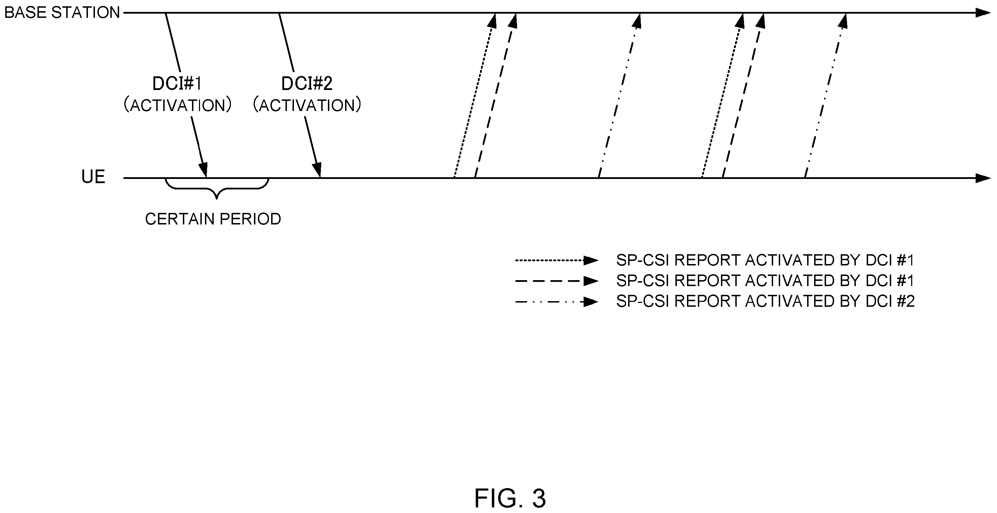

Control may be made such that overlapping of DCI indicating activation/deactivation of one or more SP-CSI configurations is avoided in a certain period (see FIG. 3). FIG. 3 shows a case where DCI #1 and DCI #2 indicating activation/deactivation of reports of SP-CSI configurations are transmitted from a base station to a UE.

For example, the base station may make such control that plural pieces of DCI indicating activation/deactivation of the SP-CSI configurations are not transmitted in a period (the certain period) with a certain number of symbols. In other words, in the certain period, control is made such that DCI indicating activation/deactivation of the SP-CSI configuration to a certain UE is transmitted only once at a maximum. For example, as shown in FIG. 3, control is made such that only one of DCI #1 or DCI #2 is transmitted in the certain period.

In the certain period, the UE may perform a receiving process, assuming that DCI indicating activation/deactivation of the report of the SP-CSI configuration is not received multiple times (or receiving timing is not overlapped). In this case, after having received DCI indicating activation/deactivation of the report of the SP-CSI configuration once in the certain period, the UE may skip monitoring of such DCI (DCI employing SP-CSI-RNTI) in the remaining period. Thus, a load of receiving process on the UE can be reduced.

In a case of indicating activation/deactivation of reports of a plurality of SP-CSI configurations, these indications can be included in a single piece of DCI. Thus, reporting of the plural pieces of DCI in the certain period are not necessary, and an increase in signaling overhead can be suppressed.

The certain period (may be also referred to as an "OFDM symbol set") with the certain number of symbols may be a slot. Alternatively, the certain period with the certain number of symbols may be a period (CORESET duration) to which a control resource set as a downlink control channel allocation region is configured.

Control may be made such that DCI indicating activation/deactivation of the SP-CSI configuration and DCI utilized for other purposes do not overlap with each other in the certain period. The DCI utilized for other purposes includes at least one of DCI (UL grant) scheduling a UE-specific PUSCH (for example, UL data (UL-SCH)) or DCI indicating activation/deactivation of UL data transmission (also referred to as "configured grant Type2") not scheduled by DCI.

For example, the base station may make such control that both of DCI indicating activation/deactivation of the SP-CSI configuration and DCI utilized for the other purposes are not transmitted in the certain period. In other words, in the certain period, control is made such that only one of DCI indicating activation/deactivation of the SP-CSI configuration or DCI utilized for the other purposes is transmitted at a maximum to a certain UE.

In the certain period, the UE may perform the receiving process, assuming that the plural pieces of DCI for different purposes is not received. In this case, after having received certain DCI once in the certain period, the UE may skip monitoring of other pieces of DCI in the remaining period. Thus, a load of receiving process on the UE can be reduced.

### (Third Aspect)

In a third aspect, the timing of transmitting a report of a SP-CSI configuration on PUSCH indicated by DCI is controlled.

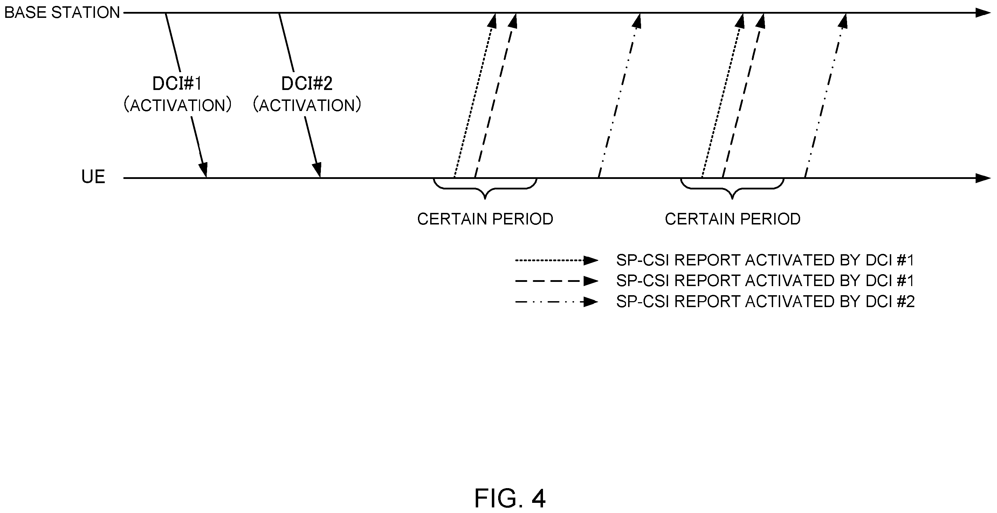

Control may be made such that reports of SP-CSI configurations utilizing a PUSCH(s) indicated based on different pieces of DCI do not overlap with each other in a certain period (see FIG. 4). FIG. 4 shows a case where reports of different SP-CSI configurations are activated by DCI #1 and DCI #2.

For example, a base station may make such control that a plurality of reports of SP-CSI configurations configured by DCI indicating activation are not transmitted in a period (the certain period) with a certain number of symbols. In other words, in the certain period, control is made such that the report of the SP-CSI configuration transmitted from a certain UE is equal to or less than once at a maximum. For example, as shown in FIG. 3, control is made such that both of an SP-CSI report transmitted according to an indication of DCI #1 and an SP-CSI report transmitted according to an indication of DCI #2 are not included in the certain period.

In the certain period, the UE may control the CSI report, assuming that the reports of the SP-CSI configurations indicated by plural pieces of DCI are not performed (or overlapping of the timing of transmitting the CSI reports indicated by the different pieces of DCI is avoided). In this case, in the certain period, the UE may make such control that after a report of an SP-CSI configuration indicated by certain DCI has been transmitted once, the UE does not perform reports of SP-CSI configurations indicated by other pieces of DCI in the remaining period. Thus, a load of transmitting process on the UE can be reduced.

The certain period (may be also referred to as an "OFDM symbol set") with the certain number of symbols may be a slot. Alternatively, the certain period with the certain number of symbols may be a PUSCH allocation region (or a transmitting period).

Control may be made such that a PUSCH utilized for transmission of the report of the SP-CSI configuration and a PUSCH utilized for other purposes do not overlap with each other in the certain period. The PUSCH utilized for the other purposes includes at least one of PUSCH utilized for transmission of UE-specific data (for example, UL data (UL-SCH)) or PUSCH utilized for UL data transmission (also referred to as "configured grant Type2") not scheduled by DCI.

For example, the base station may control scheduling such that both of the PUSCH utilized for transmission of the SP-CSI configuration and the PUSCH utilized for the other purposes are not transmitted in the certain period. In other words, in the certain period, scheduling is controlled such that only one of the PUSCH transmitting the SP-CSI configuration or the PUSCH utilized for the other purposes is transmitted at a maximum to a certain UE.

In the certain period, the UE may perform a transmitting process, assuming that transmissions of a plurality of PUSCHs for different purposes are not performed. Thus, overlapping of a plurality of PUSCH transmissions can be suppressed.

Alternatively, in a case where there is an overlap of transmissions of the plurality of PUSCHs for the different purposes, the UE may control transmission with plural pieces of data being multiplexed on a certain PUSCH. For example, in a case where there is an overlap of the transmitting timings of the report of the SP-CSI configuration and the UL data, the UE may control transmission with the report of the SP-CSI configuration and the UL data being multiplexed on a PUSCH.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

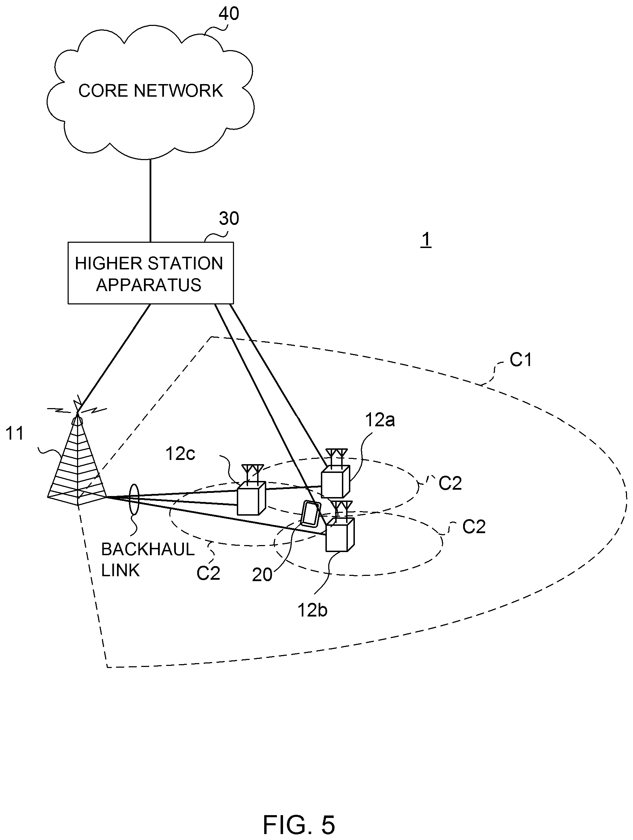

FIG. 5 is a diagram to show an example of a schematic structure of the radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can execute CA or DC by using a plurality of cells (CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a certain signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if certain physical channels use different subcarrier spacings of the OFDM symbols constituted and/or different numbers of the OFDM symbols, it may be referred to as that the numerologies are different.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

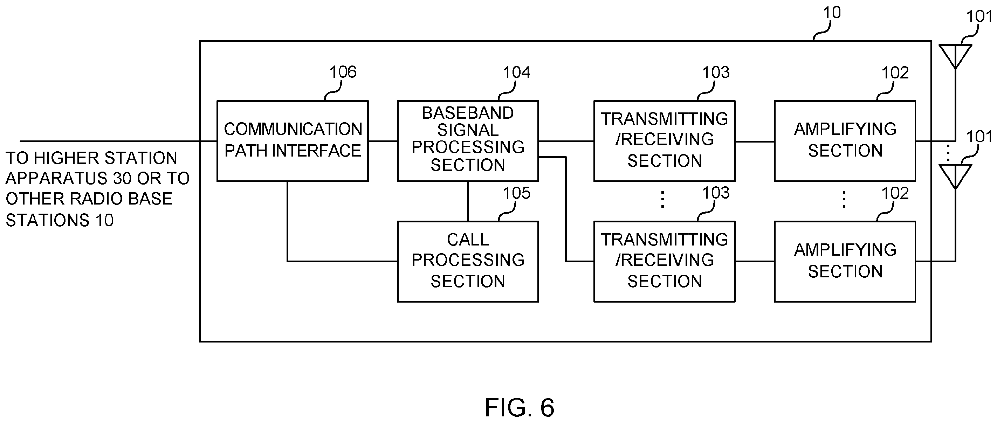

FIG. 6 is a diagram to show an example of an overall structure of the radio base station according to one embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 may receive, by using a resource specified semi-persistently, the channel state information (SP-CSI) transmitted from the user terminal 20. The transmitting/receiving sections 103 transmit the downlink control information indicating the report of SP-CSI by means of the uplink shared channel. The transmitting/receiving sections 103 may transmit, by higher layer signaling, information regarding candidates of a plurality of SP-CSI configurations reported utilizing the uplink shared channel.

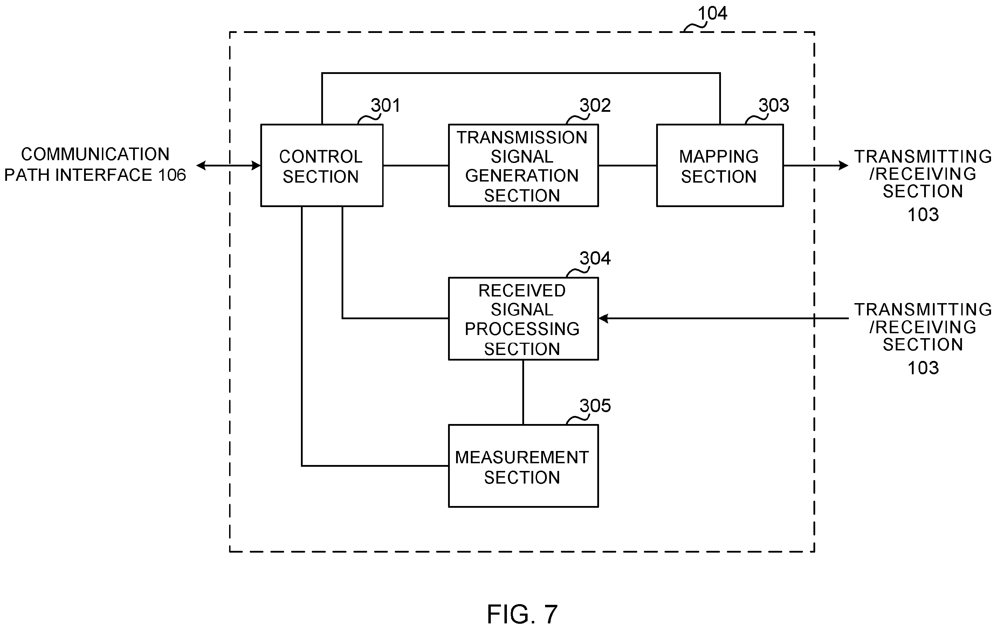

FIG. 7 is a diagram to show an example of a functional structure of the radio base station according to one embodiment; Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH. Transmission confirmation information, and so on), a random access preamble (for example, a signal transmitted on the PRACH), an uplink reference signal, and so on.

The control section 301 may control the receiving process (for example, decoding) in a period including the resource (an SP-CSI resource) specified semi-persistently. The control section 301 may control generation and transmission of information (for example, DCI for SP-CSI report activation) indicating the start of an SP-CSI report.

The control section 301 controls at least one of activation or deactivation of reports of a plurality of different SP-CSI configurations. The control section 301 may make such control that plural pieces of downlink control information indicating at least one of activation or deactivation of the SP-CSI configuration are not transmitted in a certain period.

The control section 301 may make such control that at least two or more pieces of the downlink control information indicating at least one of activation or deactivation of the SP-CSI configuration, the downlink control information scheduling the uplink shared channel specific to the user terminal, and the downlink control information indicating activation of PUSCH transmission scheduled by the downlink control information are not transmitted in the certain period.

The control section 301 may control scheduling such that the timing of reporting the SP-CSI configurations activated by plural pieces of downlink control information is not configured multiple times in the certain period.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### (User Terminal)

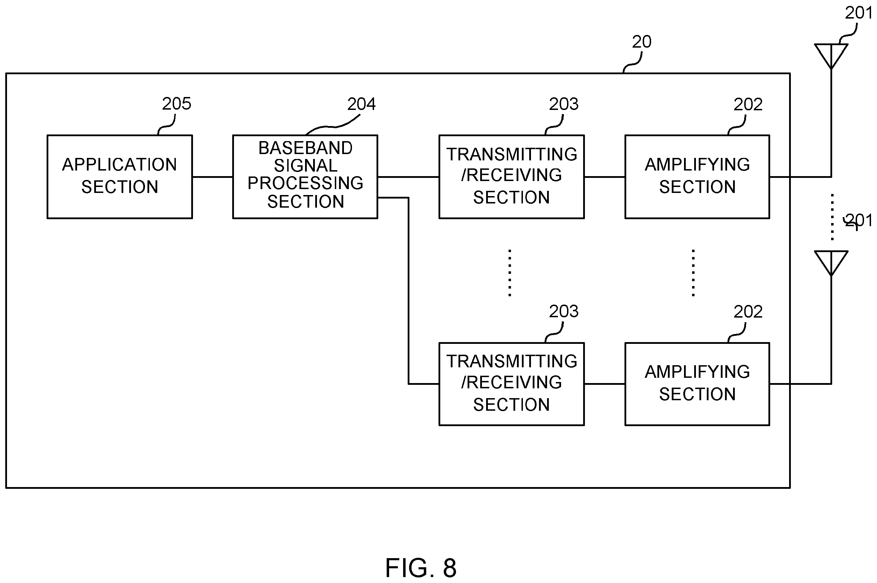

FIG. 8 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may transmit SP-CSI by means of the resource specified semi-persistently. The transmitting/receiving sections 203 receive the downlink control information indicating the report of SP-CSI by means of the uplink shared channel. The transmitting/receiving sections 203 may receive, by the higher layer signaling, the information regarding the candidates of the plurality of SP-CSI configurations reported utilizing the uplink shared channel.

The transmitting/receiving sections 203 may perform reception, assuming that plural pieces of downlink control information indicating at least one of activation or deactivation of the SP-CSI configuration are not transmitted in the certain period. The transmitting/receiving sections 203 may perform reception, assuming that at least two or more pieces of the downlink control information indicating at least one of activation or deactivation of the SP-CSI configuration, the downlink control information scheduling the uplink shared channel specific to the user terminal, and the downlink control information indicating activation of PUSCH transmission scheduled by the downlink control information are not transmitted in the certain period.

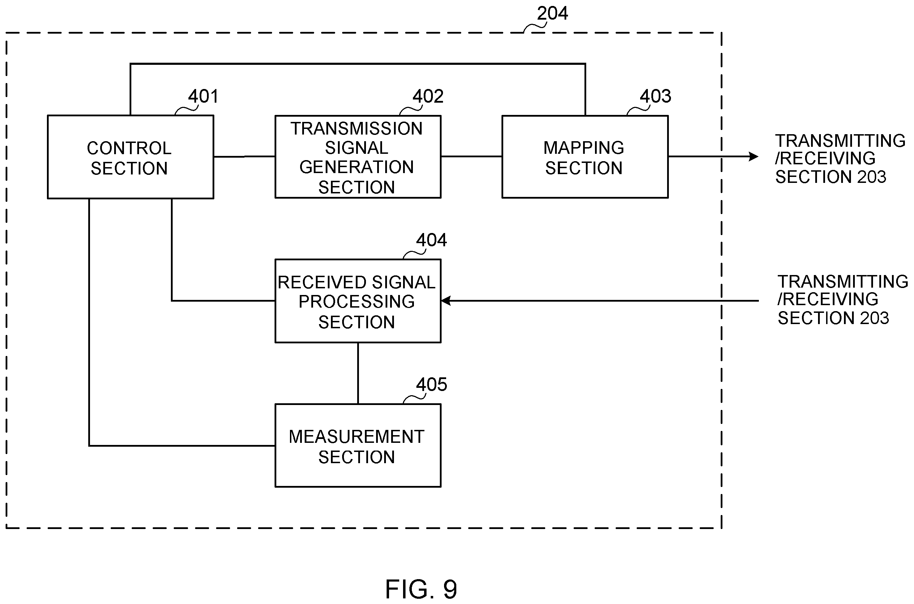

FIG. 9 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 controls, based on the downlink control information, at least one of activation or deactivation of the reports of the plurality of different SP-CSI configurations.

The control section 401 may select, based on the downlink control information, a certain SP-CSI configuration from a plurality of SP-CSI configuration candidates configured by the higher layer signaling.

The control section 401 may control reception, assuming that plural pieces of downlink control information indicating at least one of activation or deactivation of the SP-CSI configuration are not transmitted in the certain period. The control section 401 may control reception, assuming that at least two or more pieces of the downlink control information indicating at least one of activation or deactivation of the SP-CSI configuration, the downlink control information scheduling the uplink shared channel specific to the user terminal, and the downlink control information indicating activation of PUSCH transmission scheduled by the downlink control information are not transmitted in the certain period.

The control section 401 may control the report of the SP-CSI configuration, assuming that the timing of reporting the SP-CSI configurations activated by plural pieces of downlink control information is not configured multiple times in the certain period.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

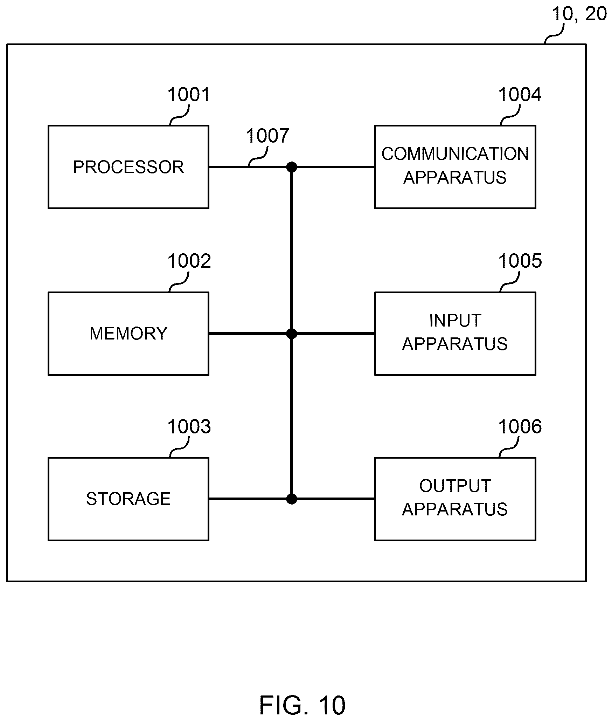

For example, a radio base station, a user terminal, and so on according to one embodiment of the present disclosure may function as a computer that executes the processes of the radio communication method of the present disclosure. FIG. 10 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to one embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector, " "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these. .

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and noninclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the invention according to the present disclosure has been described in detail above, it should be obvious to a person skilled in the art that the invention according to the present disclosure is by no means limited to the embodiments described in this specification. The invention according to the present disclosure can be implemented with various corrections and in various modifications, without departing from the scope of the invention defined by the recitations of claims. Consequently, the description in this specification is provided only for the purpose of explaining examples, and should by no means be construed to limit the invention according to the present disclosure in any way.

## Claims

1. A terminal (20) comprising:
a receiving section (203) configured to receive information about an index of at least one Semi-Persistent Channel State Information, SP-CSI, configuration that is associated with a codepoint in a bit field included in downlink control information; and
a control section (401) configured to perform at least one of activation and deactivation of the at least one SP-CSI configuration based on the downlink control information;
**characterized in that** activation of different SP-CSI configurations is indicated by using mutually different downlink control information received with no time overlap.

2. The terminal (20) according to claim 1, wherein the control section is configured to control to transmit SP-CSI by using a physical uplink shared channel.

3. A radio communication method for a terminal (20), comprising:
receiving information about an index of at least one Semi-Persistent Channel State Information (SP-CSI) configuration that is associated with a codepoint in a bit field included in downlink control information; and
performing at least one of activation and deactivation of the at least one SP-CSI configuration based on the downlink control information;
**characterized in that** activation of different SP-CSI configurations is indicated by using mutually different downlink control information received with no time overlap.

4. A base station (10) comprising:
a transmitting section (103) configured to transmit information about an index of at least one Semi-Persistent Channel State Information (SP-CSI) configuration that is associated with a codepoint in a bit field included in downlink control information; and
a control section (301) configured to report at least one of activation and deactivation of the at least one SP-CSI configuration by using the downlink control information;
**characterized in that** activation of different SP-CSI configurations is indicated by using mutually different downlink control information received with no time overlap.

5. A system comprising:
a terminal according to claim 1 or 2; and
a base station according to claim 4.

## Patentansprüche

1. Endgerät (20), umfassend:
einen Empfangsabschnitt (203), der dazu ausgebildet ist, Informationen über einen Index von mindestens einer SP-CSI-Konfiguration (semi-persistent channel state information (SP-CSI)) zu empfangen, die mit einem Codepunkt in einem Bitfeld, das in Downlink Control Information (DCI) eingeschlossen ist, assoziiert ist; und
einen Steuerabschnitt (401), der dazu ausgebildet ist, mindestens eine von Aktivierung und Deaktivierung der mindestens einen SP-CSI-Konfiguration basierend auf der Downlink Control Information (DCI) vorzunehmen;
**dadurch gekennzeichnet, dass** die Aktivierung unterschiedlicher SP-CSI-Konfigurationen unter Verwendung voneinander verschiedener Downlink Control Information (DCI), die ohne zeitliche Überlappung empfangen werden, angezeigt wird,

2. Endgerät (20) nach Anspruch 1, wobei der Steuerabschnitt dazu ausgebildet ist, die Übertragung von SP-CSI unter Verwendung eines Physical Uplink Shared Channel zu steuern.

3. Funkkommunikationsverfahren für ein Endgerät (20), umfassend:
Empfangen von Informationen über einen Index von mindestens einer SP-CSI-Konfiguration (semi-persistent channel state information (SP-CSI)), die mit einem Codepunkt in einem Bitfeld, das in Downlink Control Information (DCI) eingeschlossen ist, assoziiert ist; und
Vornehmen von mindestens einer von Aktivierung und Deaktivierung der mindestens einen SP-CSI-Konfiguration basierend auf der Downlink Control Information (DCI);
**dadurch gekennzeichnet, dass** die Aktivierung unterschiedlicher SP-CSI-Konfigurationen unter Verwendung voneinander verschiedener Downlink Control Information (DCI), die ohne zeitliche Überlappung empfangen werden, angezeigt wird,

4. Basisstation (10), umfassend:
einen Übertragungsabschnitt (103), der dazu ausgebildet ist, Informationen über einen Index von mindestens einer SP-CSI-Konfiguration (semi-persistent channel state information (SP-CSI)) zu übertragen, die mit einem Codepunkt in einem Bitfeld, das in Downlink Control Information (DCI) eingeschlossen ist, assoziiert ist; und
einen Steuerabschnitt (301), der dazu ausgebildet ist, mindestens eine von Aktivierung und Deaktivierung der mindestens einen SP-CSI-Konfiguration unter Verwendung der Downlink Control Information (DCI) zu melden;
**dadurch gekennzeichnet, dass** die Aktivierung unterschiedlicher SP-CSI-Konfigurationen unter Verwendung voneinander verschiedener Downlink Control Information (DCI), die ohne zeitliche Überlappung empfangen werden, angezeigt wird,

5. System, umfassend:
ein Endgerät nach Anspruch 1 oder 2; und
eine Basisstation nach Anspruch 4.

## Revendications

1. Terminal (20) comprenant :
une section de réception (203) configurée pour recevoir des informations sur un index d'au moins une configuration d'Informations d'état de canal semi-persistantes, SP-CSI, qui est associée à un point de code dans un champ de bits inclus dans des informations de commande de liaison descendante ; et
une section de commande (401) configurée pour réaliser au moins l'une de l'activation et de la désactivation de l'au moins une configuration SP-CSI sur la base des informations de commande de liaison descendante ;
**caractérisé en ce que** l'activation de configurations SP-CSI différentes est indiquée par l'utilisation d'informations de commande de liaison descendante mutuellement différentes reçues sans chevauchement temporel.

2. Terminal (20) selon la revendication 1, dans lequel la section de commande est configurée pour commander la transmission de SP-CSI par l'utilisation d'un canal partagé de liaison montante physique.

3. Procédé de communication radio pour un terminal (20), comprenant :
la réception d'informations sur un index d'au moins une configuration d'Informations d'état de canal semi-persistantes (SP-CSI) qui est associée à un point de code dans un champ de bits inclus dans des informations de commande de liaison descendante ; et
la réalisation d'au moins l'une de l'activation et de la désactivation de l'au moins une configuration SP-CSI sur la base des informations de commande de liaison descendante ;
**caractérisé en ce que** l'activation de configurations SP-CSI différentes est indiquée par l'utilisation d'informations de commande de liaison descendante mutuellement différentes reçues sans chevauchement temporel.

4. Station de base (10) comprenant :
une section de transmission (103) configurée pour transmettre des informations sur un index d'au moins une configuration d'Informations d'état de canal semi-persistantes (SP-CSI) qui est associée à un point de code dans un champ de bits inclus dans des informations de commande de liaison descendante ; et
une section de commande (301) configurée pour signaler au moins l'une de l'activation et de la désactivation de l'au moins une configuration SP-CSI par l'utilisation des informations de commande de liaison descendante ;
**caractérisée en ce que** l'activation de configurations SP-CSI différentes est indiquée par l'utilisation d'informations de commande de liaison descendante mutuellement différentes reçues sans chevauchement temporel.

5. Système comprenant :
un terminal selon la revendication 1 ou la revendication 2 ; et
une station de base selon la revendication 4.
